(19) Europäisches Patentamt
European Patent Office
Office européen des brevets

(11) EP 2 485 835 B1

(12) # FASCICULE DE BREVET EUROPEEN

(45) Date de publication et mention de la délivrance du brevet:
**26.08.2020 Bulletin 2020/35**

(21) Numéro de dépôt: **10781958.3**

(22) Date de dépôt: **08.10.2010**

(51) Int Cl.:
***B01J 20/24*** *(2006.01)* ***C02F 1/28*** *(2006.01)*
***G21F 9/12*** *(2006.01)*

(86) Numéro de dépôt international:
**PCT/FR2010/052122**

(87) Numéro de publication internationale:
**WO 2011/042671 (14.04.2011 Gazette 2011/15)**

(54) **PROCEDE DE TRAITEMENT PAR OXYDATION D'UN SUBSTRAT POUR L'ADSORPTION DE RADIONUCLÉIDES ET L'UTILISATION DU SUBSTRAT TRAITÉ PAR CE PROCÉDÉ POUR LE PIÉGEAGE DE RADIONUCLÉIDES CONTENUS DANS UN FLUIDE**

VERFAHREN ZUR OXIDATIONSBEHANDLUNG EINES SUBSTRATS ZUR ADSORPTION VON RADIONUKLIDEN UND VERWENDUNG DES DURCH DIESES VERFAHREN BEHANDELTEN SUBSTRATS ZUM ABFANGEN VON IN EINER FLÜSSIGKEIT ENTHALTENDEN RADIONUKLIDEN

METHOD FOR THE OXIDATION TREATMENT OF A SUBSTRATE FOR THE ADSORPTION OF RADIONUCLIDES AND USE OF THE SUBSTRATE TREATED BY THIS PROCESS FOR CAPTURING RADIONUCLIDES CONTAINED IN A FLUID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.10.2009 FR 0957024**

(43) Date de publication de la demande:
**15.08.2012 Bulletin 2012/33**

(73) Titulaire: **Pe@rl**
**87000 Limoges (FR)**

(72) Inventeurs:
- **DECOSSAS, Jean Louis**
  **F-87520 Cieux (FR)**
- **KRAUSZ, Pierre**
  **F-87170 Isle (FR)**
- **GLOAGUEN, Vincent**
  **F-87000 Limoges (FR)**
- **JAUBERTY, Loïc**
  **F-87000 Limoges (FR)**
- **ASTIER, Cédric**
  **F-87260 Vicq sur Breuilh (FR)**
- **BERLAND, Alexandre**
  **F-87250 Bessines sur Gartempe (FR)**
- **ROYER, Anne**
  **87100 Limoges (FR)**
- **NIORT, Isabelle**
  **F-87510 Nieul (FR)**
- **GRANGER, Valérie**
  **87410 Le Palais sur Vienne (FR)**

(74) Mandataire: **Aquinov**
**Allée de la Forestière**
**33750 Beychac et Caillau (FR)**

(56) Documents cités:
**EP-A1- 0 240 985** **WO-A1-92/15397**
**WO-A1-2006/096472** **JP-A- 60 172 348**

- **ARGUN M E ET AL: "Removal of Cd(II), Pb(II), Cu(II) and Ni(II) from water using modified pine bark", DESALINATION, ELSEVIER, AMSTERDAM, NL LNKD-DOI:10.1016/J.DESAL.2009.01.020, vol. 249, no. 2, 7 octobre 2009 (2009-10-07), pages 519-527, XP026716815, ISSN: 0011-9164 [extrait le 2009-10-07]**
- **ARGUN ET AL: "A new approach to modification of natural adsorbent for heavy metal adsorption", BIORESOURCE TECHNOLOGY, ELSEVIER BV, GB LNKD-DOI:10.1016/J.BIORTECH.2007.04.037, vol. 99, no. 7, 8 février 2008 (2008-02-08), pages 2516-2527, XP022472780, ISSN: 0960-8524**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 485 835 B1

- ARGUN M E ET AL: "Activation of pine cone using Fenton oxidation for Cd(II) and Pb(II) removal", BIORESOURCE TECHNOLOGY, ELSEVIER BV, GB LNKD- DOI:10.1016/J.BIORTECH.2008.04.014, vol. 99, no. 18, 1 décembre 2008 (2008-12-01), pages 8691-8698, XP024524979, ISSN: 0960-8524 [extrait le 2008-05-20]
- RIBE V ET AL: "Leaching of contaminants from untreated pine bark in a batch study: Chemical analysis and ecotoxicological evaluation", JOURNAL OF HAZARDOUS MATERIALS, ELSEVIER, AMSTERDAM, NL LNKD- DOI:10.1016/J.JHAZMAT.2008.07.063, vol. 163, no. 2-3, 30 avril 2009 (2009-04-30), pages 1096-1100, XP025942591, ISSN: 0304-3894 [extrait le 2008-07-23]
- G. VÀZQUEZ: "Adsorption of heavy metal ions by chemically modified Pinus Pinaster bark", BIORESOURCE TECHNOLOGY, vol. 48, no. 3, 30 mars 1994 (1994-03-30), pages 251-255, XP002579989,
- PALMA G ET AL: "Removal of metal ions by modified Pinus radiata bark and tannins from water solutions", WATER RESEARCH, ELSEVIER, AMSTERDAM, NL LNKD- DOI:10.1016/J.WATRES.2003.08.008, vol. 37, no. 20, 1 décembre 2003 (2003-12-01), pages 4974-4980, XP004470692, ISSN: 0043-1354
- BONTEA D ET AL: "Removal of uranyl ions from wastewaters using cellulose and modified cellulose materials</p> </p>", JOURNAL OF RADIOANALYTICAL AND NUCLEAR CHEMISTRY, KLUWER ACADEMIC PUBLISHERS, DO LNKD- DOI:10.1007/S10967-006-0167-9, vol. 268, no. 2, 1 mai 2006 (2006-05-01), pages 305-311, XP019402222, ISSN: 1588-2780
- Emin Mehmet ET AL: "Removal of heavy metal ions using chemically modified adsorbents", J. Int. Environmental Application & Science, vol. 1, 1 January 2006 (2006-01-01), pages 27-40, XP055457891,

## Description

La présente invention concerne un procédé de traitement par oxydation d'un substrat en matériau lignocellulosique pour l'adsorption de radionucléides dans des fluides chargés en radionucléides. La présente invention concerne également l'utilisation d'un matériau lignocellulosique traité par un tel procédé pour le piégeage de radionucléides contenus dans un fluide.

A titre d'exemple, dans le domaine de l'industrie, il existe des lieux d'exploitation de matériaux naturels tels que l'uranium ou certains autres métaux plus communs comme le plomb, nickel, chrome, zinc, cuivre. Dans le cas de l'uranium, on le trouve dans les matériaux minéraux (granit, gneiss,...). Son extraction est réalisée notamment par la méthode de lixiviation statique (in situ (ISL) ou en tas (ETL)) ou dynamique avec emploi d'une solution acide ou alcaline selon la nature de la roche mère ou par la méthode de récupération in situ (ISR) grâce à l'injection d'oxygène et de dioxyde de carbone dans la roche. Ces méthodes permettent de dissoudre l'uranium. De nombreuses quantités de fluides sont mises en oeuvre. Certains fluides sont recyclés et d'autres nécessitent des traitements souvent en vue de leur rejet dans la nature.

Il serait d'autant plus attractif de pouvoir traiter ces rejets fluides de même que les éventuels rejets atmosphériques engendrés à l'aide de procédés faisant appel à des matériaux naturels, renouvelables et recyclables.

De plus, lorsque certains sites sont abandonnés, les eaux naturelles d'écoulement et/ou de ruissellement se chargent de radionucléides. Aussi, en vue de leur utilisation (arrosage de jardin, baignade, réserve, ...), il s'avère nécessaire de traiter ces eaux afin de retirer ces radionucléides.

Il en est de même pour les métaux lourds dans certaines mines d'extraction, ou dans certaines industries de transformation des métaux.

Ces traitements peuvent être étendus, sans être exhaustifs, aux eaux potables ainsi qu'aux eaux provenant des océans, mers, fleuves, lacs, étangs, retenues, rivières et cours d'eau dans lesquels des radionucléides sont naturellement présents ou issus de pollutions industrielles.

Il apparaît que les traitements industriels actuels de récupération des radionucléides présentent l'inconvénient de recourir à des procédés qui génèrent au final des déchets qu'il faut ensuite mettre en décharge si bien que le problème est déplacé mais non résolu.

Ainsi, pour assurer un traitement allant dans le sens du recyclable, la ressource renouvelable accessible est un substrat en matériau lignocellulosique et notamment des écorces. La présente invention propose l'utilisation de ce substrat pour assurer le traitement de l'eau chargée de métaux lourds et notamment pour retirer les radionucléides présents. Le document ARGUN M E ET AL: "Removal of Cd(II), Pb(II), Cu(II) and Ni(II) from water using modified pine bark",DESALINATION, ELSEVIER, AMSTERDAM, NL , vol. 249, no. 2, 7 octobre 2009, pages 519-527, XP026716815, décrit plusieurs procédés de préparation et de modification d'un substrat à base d'écorces de pin pour l'adsorption de métaux lourds utilisant différents traitements chimiques. Le document ARGUN ET AL: "A new approach to modification of natural adsorbent for heavy metal adsorption", BIORESOURCE TECHNOLOGY, ELSEVIER BV, GB , vol. 99, 8 Juin 2007, pages 2516-2527, XP022472780 décrit un procédé de modification d'un matériau adsorbant à base d'écorces de pin pour l'adsorption de métaux lourds par réaction d'oxydation de Fenton.

On connaît la demande de brevet japonais JP 60172348 qui décrit un procédé de fabrication d'un substrat à base d'écorces, apte à adsorber des métaux lourds directement de l'eau de mer ou des eaux usées.

Dans cet art antérieur, les écorces sont séchées, broyées et traitées à l'acide pour activer les fonctions chimiques échangeuses d'ions des écorces, en l'occurrence de l'acide nitrique puis les produits solubles des écorces sont stabilisées au formaldéhyde. Des phases de lavage et séchage complètent le procédé entre ces étapes actives.

L'art antérieur ainsi mentionné présente un inconvénient majeur qui consiste à recourir à du formaldéhyde dont on sait qu'il est toxique et cancérigène.

Le problème posé est non seulement d'éviter les risques sanitaires liés au formaldéhyde mais il se pose également d'autres problèmes comme celui du relargage des produits hydrosolubles.

Lorsque l'on prépare un substrat de traitement de fluides chargés en métaux lourds, il faut éviter tout relargage de produits hydrosolubles tels que des tannins ou autres composés phénoliques notamment, qui engendreraient une pollution des liquides en sortie lors du traitement des métaux lourds, sans forte toxicité supplémentaire mais néanmoins qu'il convient d'éviter.

Soit on laisse ces composés hydrosolubles mais en évitant leur relargage en les stabilisant dans les écorces. De ce fait, les composés hydrosolubles subsistent dans les écorces, sans perturber les fonctions de capture des métaux lourds et sans relargage dans les solutions fluides rejetées après adsorption desdits métaux lourds, ce n'est pas la voie retenue dans la présente invention.

Pour ce faire, une autre solution consiste à retirer ces composés hydrosolubles. Cette méthode n'apparaît pas non plus souhaitable a priori car elle engendre des coûts incompatibles avec la bonne rentabilité industrielle, si bien qu'elle n'est actuellement peu mise en oeuvre.

L'invention propose de pallier ces problèmes en apportant une solution industrielle satisfaisante.

Compte tenu de l'évolution des traitements et de la tendance normale et rationnelle de recourir à des traitements qui soient les plus "verts" possible, c'est-à-dire limitant les impacts sur l'environnement, il convient de rechercher un composé adapté qui permet la solubilisation et le retrait préalable des composés hydrosolubles du substrat avant son utilisation pour adsorber les radionucléides.

On connaît d'autres moyens pour récupérer les radionucléides qui consistent à recourir à des composés humiques tels que de la tourbe ou du compost car ces composés humiques captent les cations des métaux lourds. On peut se reporter aux références des demandes de brevet suivantes WO-2006/096472, DE-19.925601 ou encore US-5.602.071. Le problème de ces composés humiques est leur faible capacité de perméation qui les confinent à des essais ou à des tests en petites quantités mais les rend difficilement utilisables de façon satisfaisante en milieu industriel pour des volumes importants de traitement dans des délais courts.

La présente invention propose de solubiliser ces composés hydrosolubles par un traitement chimique, en faisant appel à une étape dite oxydation de Fenton. La présente invention est définie dans les revendications annexées.

Pour illustrer la présente description, il est adjoint des dessins sur lesquels les différentes figures représentent :

- figure 1 : courbe $q$ en fonction de $C_{rés}$ pour les écorces traitées à l'acide et utilisées comme témoin, dans le cas d'une application à l'adsorption du plomb,
- figure 2 : courbe $q$ en fonction de $C_{rés}$ pour les écorces traitées à l'acide et ayant subi la réaction d'oxydation de Fenton selon la présente invention, dans le cas d'une application à l'adsorption du plomb,
- figure 3 : courbe $q$ en fonction de $C_{rés}$ pour les écorces traitées à l'acide et utilisées comme témoin, dans le cas d'une application à l'adsorption de l'uranium,
- figure 4 : courbe $q$ en fonction de $C_{rés}$ pour les écorces traitées à l'acide et ayant subi la réaction d'oxydation de Fenton selon la présente invention, dans le cas d'une application à l'adsorption de l'uranium,
- figure 5 : courbe $q$ en fonction de $C_{rés}$ pour les écorces traitées à l'acide et utilisées comme témoin, dans le cas d'une application à l'adsorption du baryum,
- figure 6 : courbe $q$ en fonction de $C_{rés}$ pour les écorces traitées à l'acide et ayant subi la réaction d'oxydation de Fenton selon la présente invention, dans le cas d'une application à l'adsorption du baryum.

Le procédé de traitement par oxydation d'un substrat en matériau lignocellulosique pour l'adsorption de radionucléides dans des fluides chargés en radionucléides selon la présente invention, consiste à faire subir audit substrat en matériau lignocellulosique un traitement destiné à améliorer sa capacité de fixation desdits radionucléides ainsi qu'à solubiliser les produits hydrosolubles. Dans le mode de réalisation, non limitatif, qui est maintenant décrit à titre d'exemple, on utilise en tant que substrat en matériau lignocellulosique des écorces notamment d'origine forestière, en particulier de pin Douglas, broyées en granules, de dimensions de quelques millimètres, 1 à 4 mm pour donner un ordre d'idée.

Ces écorces sont dans un premier temps broyées et calibrées pour ne retenir que la plage granulométrique souhaitée. On note que cette plage granulométrique dépend de la nature de l'écorce.

Le choix de cette plage a un double objectif.

La granulométrie minimale doit éviter le colmatage lors de l'utilisation de la matière dans divers systèmes d'emballage (colonne, sachet, ...).

De plus, il faut aussi que le diamètre soit suffisamment petit pour être efficace et pour offrir une surface de contact importante pour l'adsorption et donc générer une capacité de traitement optimale.

Il s'agit là d'un compromis qui est aussi à mettre en relation avec le rendement de production. Or, on constate que pour obtenir un maximum de granules dont la taille est comprise entre 1 et 4 mm, il faut prendre en compte également le taux d'humidité résiduelle et la taille des grilles de broyage.

A titre d'exemple et en fonction de l'origine variable de l'écorce, on s'aperçoit qu'une grille de broyage de maille 3,80 mm, un taux d'humidité résiduelle de 8% et un tamis de maillage supérieur à 1mm conduisent à un rendement optimisé proche de 55%.

Les granules sont ensuite préparés pour les rendre actifs.

La première étape est une étape de rinçage, lavage, élimination des fines résiduelles après l'étape de broyage et après les différents transferts et stockages.

Certains composés hydrosolubles comme les tannins essentiellement ou autres composés phénoliques sont partiellement relargués dans l'eau de lavage et simultanément les écorces absorbent de l'eau, provoquant un gonflement par hydratation.

Les granules ainsi pré-préparés sont ensuite activés pour leur conférer des fonctionnalités échangeuses d'ions. Une solution de solubilisation des tannins et des composés phénoliques est employée. L'ordre de ces deux traitements étant sans importance.

L'activation des granules est obtenue de façon connue par un traitement acide, en l'occurrence de l'acide nitrique à 0,1 M, c'est-à-dire à 0,1 mole par litre. L'acide provoque des échanges des sels Na, K, Ca et Mg pour citer les principaux composés des sites échangeurs d'ions par des protons $H^+$.

Le suivi est obtenu par une mesure de la conductivité en fonction du pH.

Le temps de traitement est défini lorsque la conductivité atteint une asymptote horizontale, généralement lorsque la solution atteint une acidité maximale, c'est-à-dire un pH de l'ordre de 1, la conductivité pouvant atteindre environ des valeurs de 40 ms/cm.

Les écorces sont ensuite rincées de nouveau pour éliminer la solution acide.

De ce fait, les granules retrouvent un pH proche de 7 donc de la neutralité. Simultanément, la conductivité revient à la conductivité de l'eau distillée. Durant cette phase, les composés hydrosolubles sont encore éliminés. Néanmoins, il subsiste des composés hydrosolubles et ces derniers ne doivent plus être relargués ultérieurement lors de l'utilisation du produit fini à des fins de traitement de fluides, notamment de traitement de l'eau en vue de la récupération des métaux lourds et des radionucléides.

Ainsi, il faut stabiliser les granules ainsi activés et prêts à être utilisés pour éviter tout relargage ultérieur de composés hydrosolubles.

Une solution de solubilisation consiste à traiter lesdits granules en leur faisant subir une réaction d'oxydation dite d'oxydation de Fenton. Cette réaction d'oxydation provoque une diminution de la taille des tannins ou autres composés phénoliques, les rendant ainsi plus aisément extractibles. Ces composés solubles sont alors éliminés dans les eaux de lavage, interdisant leur solubilisation ultérieure lors des phases de filtration en vue de retenir des radionucléides et des métaux lourds puisque ces composés hydrosolubles sont absents.

Ce traitement de solubilisation fait appel à la réaction d'oxydation de Fenton. Cette réaction est illustrée ci-dessous :

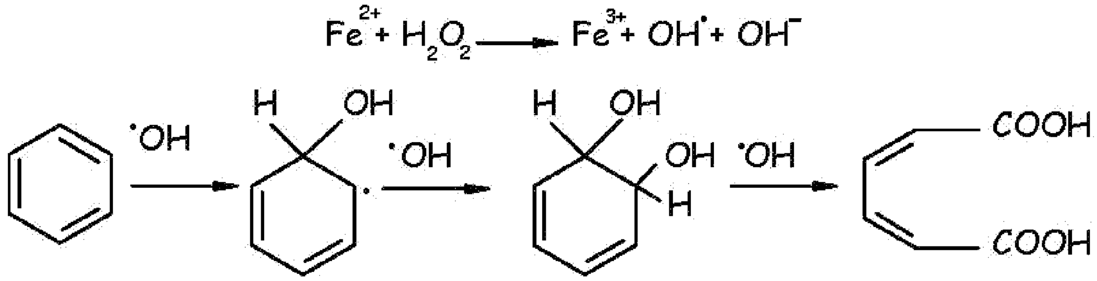

Ainsi, on constate que cette réaction permet l'ouverture des cycles, la diminution de la taille des molécules, permettant alors leur entraînement et leur élimination dans les eaux de lavage lors de la préparation des écorces.

De plus, cette réaction provoque l'ouverture des cycles benzéniques des lignines pour former des groupements carboxyles et ainsi augmenter le nombre de sites disponibles pour l'adsorption.

Pour donner un exemple, on traite 5 g d'écorces brutes tamisées dans une plage de 1 à 4 mm.

L'intérêt de cette plage granulométrique est d'éviter un colmatage tout en offrant une surface d'échange satisfaisante.

Les granules résultants sont mis en suspension dans de l'eau distillée (500 ml) pendant 2 heures à température ambiante pour un rinçage et pour une élimination des fines.

Ces granules rincés sont introduits dans 250 ml d'une solution de peroxyde d'hydrogène $H_2O_2$ (50 mM) et en présence de $FeSO_4$ (0,5 mM).

Agitation du mélange à température ambiante pendant 1h45min, notamment par agitation magnétique.

Les granules, après filtration sur verre fritté de porosité 3, sont régénérés, activés dans 250 ml d'une solution de $H_2SO_4$ (0,1 M).

On obtient 3,29 g de granules soit un rendement massique de 66%.

Dans un premier temps, on dose sur ces granules l'adsorption de plomb qui est l'élément le plus proche de l'Uranium en terme de propriétés physiques (charge, taille, masse, densité), tout en étant de manipulation simple.

On place 100 mg de granules traités comme ci-dessus en suspension dans 10ml d'une solution de plomb (concentration entre >0 et 2000 ppm), sous agitation pendant 2 heures, notamment une agitation magnétique, à température ambiante. On dose le plomb par spectrométrie d'absorption en se plaçant aux raies d'absorption caractéristiques, notamment 217 nm.

On dose les tannins relargués par spectrométrie à 760 nm par le réactif de Folin, méthode dite de Folin Ciocalteu.

On compare par rapport à des granules témoin ayant subi uniquement un traitement à l'acide dans les mêmes conditions à savoir $H_2SO_4$ (0,1 M).

Les résultats sont les suivants :

| | Granules Témoin | Granules oxydation de Fenton Plomb |
|---|---|---|
| $q_{max}$ (méq/g) | 0,162 | 0,220 |
| *b* (este de Langmuir) l/méq | 0,70 | 1,3 |
| Phénols (tannins) mg/g | 3,00 | 0,14 |

$q_{max}$ : capacité maximale de cations métalliques adsorbés par unité de masse d'écorces.
*b*: constante d'équilibre adsorption/désorption.
Phénols (tannins) : équivalent mg d'acide gallique par g d'écorce.

On note une diminution des rejets de tannins de 95% et une capacité d'adsorption $q_{max}$ augmentée de 35%.
Ces résultats sont ceux relatifs à la capacité d'adsorption des écorces qui passe par des réactions d'équilibre entre les cations métalliques et les écorces, moyennant un temps de contact suffisant.
Cela se traduit par des isothermes d'adsorption, voir figures 1 et 2 mettant en relation la quantité de cations métalliques adsorbés par unité de masse d'écorces et la concentration de cations métalliques restant en solution, les essais étant conduits à température constante.
La capacité maximale d'adsorption se calcule à partir du modèle mathématique de Langmuir :

$$q_{max.} = q(1 + b.c_{rés}) / (b.c_{rés})$$

Le but recherché est d'atteindre la plus forte capacité d'adsorption $q_{max}$.
On a donc comme paramètres :

- *q:* capacité d'adsorption à l'équilibre
- $q_{max}$ : quantité maximale de cations métalliques adsorbés par unité de masse d'écorces
- $C_{rés}$ : concentration en soluté à l'équilibre dans la phase liquide
- *b* : constante d'équilibre adsorption/désorption.

Le coefficient *b* dépend de la nature du couple adsorbant-adsorbât. Il est fonction de l'énergie d'interaction entre les molécules de soluté et le substrat, sous l'effet de la température.
Le modèle de Langmuir n'est valable que si les mesures sont effectuées sur des matériaux supposés monocouches, c'est-à-dire que les hypothèses suivantes sont respectées :

- présence de plusieurs sites d'adsorption à la surface des écorces,
- chaque site peut adsorber une seule molécule
- chaque site présente la même affinité pour les solutés,
- l'activité d'un site donné n'affecte pas l'activité des sites adjacents.

Les fonctions carboxyliques (pectines, hémicelluloses) ou hydroxyles phénoliques (lignines) sont responsables de l'adsorption.
L'affinité du substrat en matériau lignocellulosique est sélectif et dépendant des caractéristiques des métaux à adsorber (polarisabilité, enthalpie d'hydrogénation, nombre d'électrons célibataires).
On note que dans le cas présenté, des granules de pin Douglas, le plomb est particulièrement bien adsorbé.
Dans un deuxième temps, on prépare des granules de la même façon que précédemment et des essais sont conduits sur l'adsorption de l'Uranium, directement.
On place 100 mg de granules en suspension dans 10 ml d'une solution contenant de l'uranium (concentration entre >0 et 2000 ppm), sous agitation pendant 2 heures, notamment une agitation magnétique, à température ambiante.
On dose l'uranium par spectrométrie alpha.
On dose les tannins relargués par spectrométrie à 760 nm par le réactif de Folin, méthode dite de Folin Ciocalteu.
On compare par rapport à des granules témoin ayant subi uniquement un traitement à l'acide dans les mêmes conditions à savoir $H_2SO_4$ (0,1 M).
Les résultats sont les suivants :

| | Granules Témoin | Granules oxydation de Fenton Uranium |
|---|---|---|
| $q_{max}$ (méq/g) | 0,509 | 0,630 |
| *b* (este de Langmuir) L/méq | 1,00 | 1,00 |
| Phénols (tannins) mg/g | 3,00 | 0,14 |

On note une diminution des rejets de 95% et une capacité d'adsorption $q_{max}$ augmentée de 23%.

Les isothermes d'adsorption des figures 3 et 4 mettent en relation la quantité de cations métalliques adsorbés par unité de masse d'écorces et la concentration de cations métalliques restant en solution, les essais étant conduits à température constante.

Dans un troisième temps, on prépare des granules de la même façon que précédemment et des essais sont conduits sur l'adsorption du baryum, analogue chimique du radium, trop dangereux pour être manipulé à de telles concentrations.

On place 100 mg de granules traités comme ci-dessus en suspension dans 10 ml d'une solution contenant du baryum (concentration entre >0 et 2000 ppm), sous agitation pendant 2 heures, notamment une agitation magnétique, à température ambiante.

On dose le baryum par spectrométrie d'adsorption en se plaçant aux raies d'absorption caractéristiques, notamment 553 nm.

On dose les tannins relargués par spectrométrie à 760 nm par le réactif de Folin, méthode dite de Folin Ciocalteu.

On compare par rapport à des granules témoin ayant subi uniquement un traitement à l'acide dans les mêmes conditions à savoir $H_2SO_4$ (0,1 M).

Les résultats sont les suivants :

| | Granules Témoin | Granules oxydation de Fenton Baryum |
|---|---|---|
| $q_{max}$ (méq/g) | 0,580 | 0,640 |
| *b* (este de Langmuir) l/méq | 0,50 | 0,32 |
| Phénols (tannins) mg/g | 3,00 | 0,14 |

On note une diminution des rejets de 95% et une capacité d'adsorption $q_{max}$ augmentée de 10%.

Les isothermes d'adsorption des figures 5 et 6 mettent en relation la quantité de cations métalliques adsorbés par unité de masse d'écorces et la concentration de cations métalliques restant en solution, les essais étant conduits à température constante.

Ces résultats sont ensuite validés pour le radium dosé par spectrométrie gamma, à des concentrations permettant sa manipulation.

Selon un perfectionnement du procédé selon la présente invention, il est possible de réitérer plusieurs fois l'attaque au peroxyde d'hydrogène, dite réaction de Fenton, sur les granules de façon à améliorer les résultats quant à l'adsorption. On peut supposer, sans que cette interprétation soit limitative, que les radicaux libres ont une durée de vie limitée.

## Revendications

**1.** Procédé de traitement d'un substrat en matériau lignocellulosique pour l'adsorption de radionucléides dans des fluides chargés en radionucléides, **caractérisé en ce qu'**il consiste à réaliser les étapes suivantes :

- préparation du matériau lignocellulosique divisé par rinçage et soumis à un tri granulométrique,
- soumission du matériau lignocellulosique à une oxydation de Fenton,
- activation du matériau par un traitement acide, et
- rinçage.

**2.** Procédé de traitement d'un substrat en matériau lignocellulosique pour l'adsorption de radionucléides selon la revendication 1, **caractérisé en ce que** la réaction d'oxydation est conduite à température ambiante.

**3.** Procédé de traitement d'un substrat en matériau lignocellulosique pour l'adsorption de radionucléides selon la

revendication 1, ou 2, **caractérisé en ce que** le matériau lignocellulosique est constitué d'écorces forestières.

4. Procédé de traitement d'un substrat en matériau lignocellulosique pour l'adsorption de radionucléides selon l'une quelconque des revendications précédentes, **caractérisé en ce que** le tri granulométrique du matériau lignocellulosique retient les particules de dimensions comprises entre 1 et 4 mm.

5. Procédé de traitement d'un substrat en matériau lignocellulosique pour l'adsorption de radionucléides selon l'une quelconque des revendications précédentes, **caractérisé en ce que** le matériau lignocellulosique est constitué de granules d'écorces de pin de la variété Douglas.

6. Utilisation d'un matériau lignocellulosique traité par le procédé selon l'une quelconque des revendications précédentes pour le piégeage de radionucléides contenus dans un fluide chargé en radionucléides.

7. Utilisation de granules d'écorces de pin de la variété Douglas traités par le procédé selon l'une quelconque des revendications 1 à 5 pour le piégeage de l'uranium.

8. Utilisation de granules d'écorces de pin de la variété Douglas traités par le procédé selon l'une quelconque des revendications 1 à 5 pour le piégeage du radium.

**Patentansprüche**

1. Verfahren zur Behandlung eines Substrats aus lignocellulosehaltigem Material für die Adsorption von Radionukliden in mit Radionukliden belasteten Flüssigkeiten, **dadurch gekennzeichnet, dass** dieses darin besteht, die folgenden Schritte auszuführen:

   - Bereitstellen von lignocellulosehaltigem Material, das durch Spülen aufgeteilt und einer Größensortierung unterzogen worden ist,
   - Behandeln des lignocelluloshaltigen Materials mit einer Fenton-Oxidation,
   - Aktivierung des Materials durch Säurebehandlung und
   - Spülen.

2. Verfahren zur Behandlung eines Substrats aus lignocellulosehaltigem Material für die Adsorption von Radionukliden nach Anspruch 1, **dadurch gekennzeichnet, dass** die Oxidationsreaktion bei Umgebungstemperatur durchgeführt wird.

3. Verfahren zur Behandlung eines Substrats aus lignocellulosehaltigem Material für die Adsorption von Radionukliden nach Anspruch 1 oder 2, **dadurch gekennzeichnet, dass** das lignocellulosehaltige Material aus Waldrinde besteht.

4. Verfahren zur Behandlung eines Substrats aus lignocellulosehaltigem Material für die Adsorption von Radionukliden nach einem der vohergehenden Ansprüche, **dadurch gekennzeichnet, dass** die Größensortierung des lignocellulosehaltigen Materials Teilchen mit Abmessungen zwischen 1 und 4 mm zurückhält.

5. Verfahren zur Behandlung eines Substrats aus lignocellulosehaltigem Material für die Adsorption von Radionukliden nach einem der vohergehenden Ansprüche, **dadurch gekennzeichnet, dass** das lignocellulosehaltige Material von einem Granulat aus Kiefernrinde der Sorte Douglas gebildet ist.

6. Verwendung eines mit dem Verfahren nach einem der vohergehenden Ansprüche behandelten lignocellulosehaltigen Materials zum Abfangen von Radionukliden, die in einer mit Radionukliden belasteten Flüssigkeit enthalten sind.

7. Verwendung von Granulat aus Kiefernrinde der Sorte Douglas, das mit einem Verfahren nach einem der Ansprüche 1 bis 5 behandelt worden ist, zum Abfangen von Uran.

8. Verwendung von Granulat aus Kiefernrinde der Sorte Douglas, das mit einem Verfahren nach einem der Ansprüche 1 bis 5 behandelt worden ist, zum Abfangen von Radium.

## Claims

1. A method for treating a substrate made from lignocellulosic material for adsorbing radionuclides in fluids loaded with radionuclides, **characterised in that** it comprises performing the following steps:

   - preparing the lignocellulosic material divided by rinsing and subjected to granulometric sorting,
   - subjecting the lignocellulosic material to Fenton oxidation,
   - activating the material by acid treatment, and
   - rinsing.

2. A method for treating a substrate made from lignocellulosic material for absorbing radionuclides according to claim 1, **characterised in that** the oxidation reaction is conducted at ambient temperature.

3. A method for treating a substrate made from lignocellulosic material for adsorbing radionuclides according to claim 1 or 2, **characterised in that** the lignocellulosic material consists of forestry barks.

4. A method for treating a substrate made from lignocellulosic material for adsorbing radionuclides according to any one of the preceding claims, **characterised in that** the granulometric sorting of the lignocellulosic material retains the particles with dimensions of between 1 and 4 mm.

5. A method for treating a substrate made from lignocellulosic material for adsorbing radionuclides according to any one of the preceding claims, **characterised in that** the lignocellulosic material consists of granules of barks of pine of the Douglas variety.

6. Use of a lignocellulosic material treated by the method according to any one of the preceding claims for trapping radionuclides contained in a fluid loaded with radionuclides.

7. Use of granules of barks of pine of the Douglas variety treated by the method according to any one of claims 1 to 5 for trapping uranium.

8. Use of granules of barks of pine of the Douglas variety treated by the method according to any one of claims 1 to 5 for trapping radium.

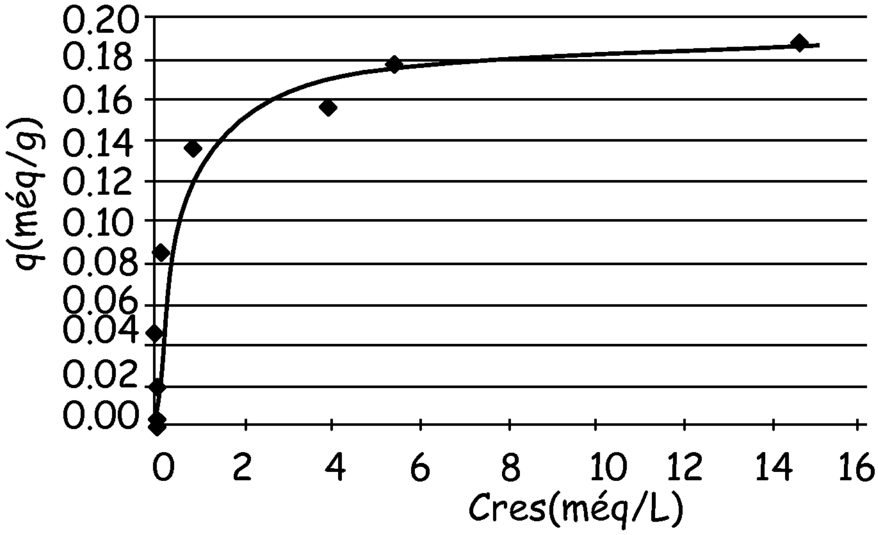
0.20
0.18
0.16
0.14
0.12
0.10
0.08
0.06
0.04
0.02
0.00
q(méq/g)
0
2
4
6
8
10
12
14
16
Cres(méq/L)

Fig.1

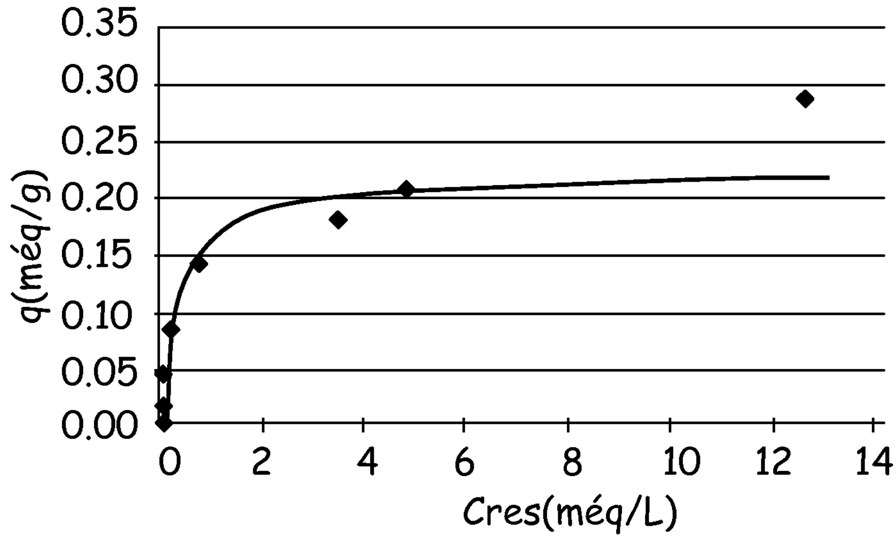
0.35
0.30
0.25
0.20
0.15
0.10
0.05
0.00
q(méq/g)
0
2
4
6
8
10
12
14
Cres(méq/L)

Fig.2

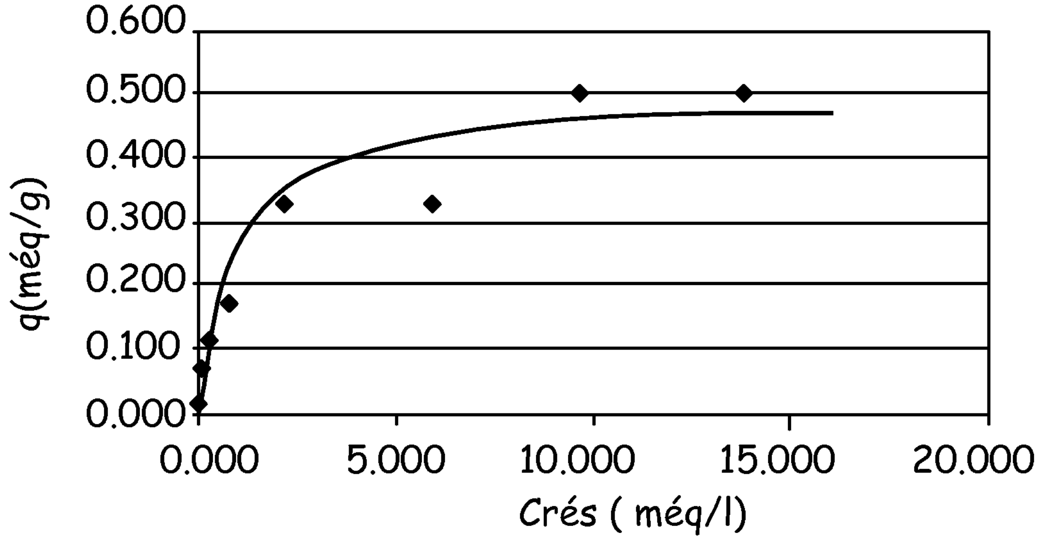
0.600
0.500
0.400
0.300
0.200
0.100
0.000
q(méq/g)
0.000
5.000
10.000
15.000
20.000
Crés ( méq/l)

Fig.3

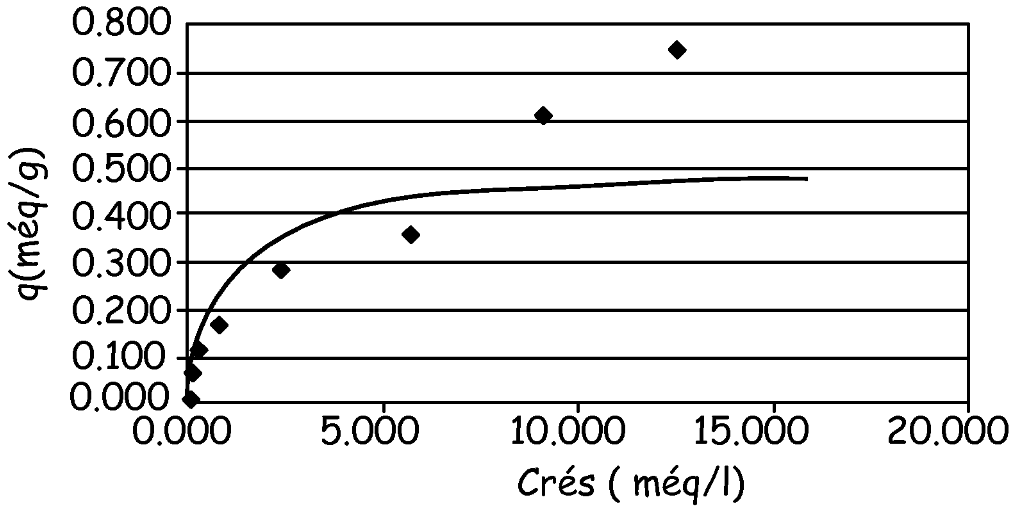
0.800
0.700
0.600
0.500
0.400
0.300
0.200
0.100
0.000
q(méq/g)
0.000
5.000
10.000
15.000
20.000
Crés ( méq/l)

Fig.4

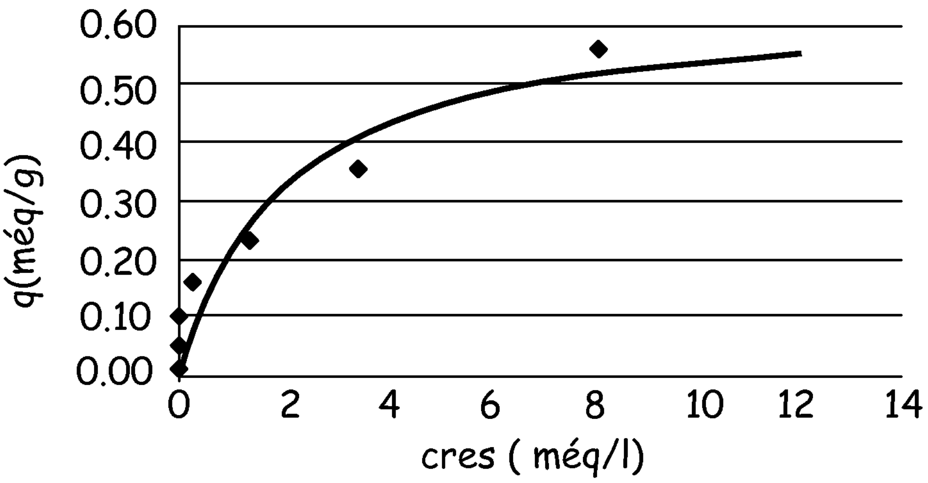
0.60
0.50
0.40
0.30
0.20
0.10
0.00
q(méq/g)
0
2
4
6
8
10
12
14
cres ( méq/l)

Fig.5

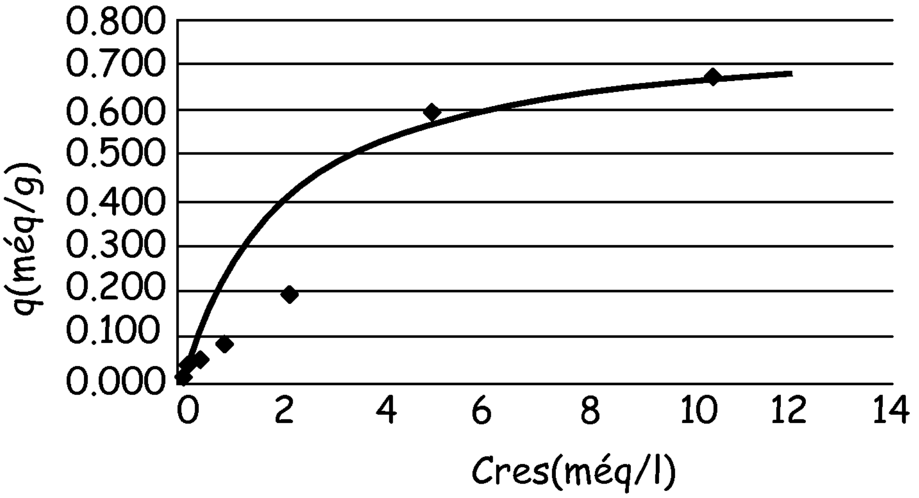
0.800
0.700
0.600
0.500
0.400
0.300
0.200
0.100
0.000
q(méq/g)
0
2
4
6
8
10
12
14
Cres(méq/l)

Fig.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- JP 60172348 B
- WO 2006096472 A
- DE 19925601
- US 5602071 A


### Littérature non-brevet citée dans la description


- Removal of Cd(II), Pb(II), Cu(II) and Ni(II) from water using modified pine bark. **ARGUN M E et al.** DESALINATION. ELSEVIER, 07 Octobre 2009, vol. 249, 519-527
- A new approach to modification of natural adsorbent for heavy metal adsorption. **ARGUN et al.** BIORESOURCE TECHNOLOGY. ELSEVIER BV, 08 Juin 2007, vol. 99, 2516-2527